# FASCICULE DE BREVET EUROPEEN

(11) **EP 3 077 958 B1**
(45) Date de publication et mention de la délivrance du brevet: **12.02.2025**
(21) Numéro de dépôt: 14821783.9
(22) Date de dépôt: 02.12.2014
(51) Int. Cl.: G06K 19/06

(54) **PROCÉDÉ ET DISPOSITIF DE SÉCURISATION D'ACCÈS À UN MESSAGE**
VERFAHREN UND VORRICHTUNG ZUR SICHERUNG DES ZUGANGS ZU EINER NACHRICHT
METHOD AND DEVICE FOR SECURING THE ACCESS TO A MESSAGE

(30) Priorité: 02.12.2013 FR 1361933
(43) Date de publication de la demande: 12.10.2016
(73) Titulaire: Advanced Track And Trace, 92500 Rueil-Malmaison (FR)
(72) Inventeur: MASSICOT, Jean-Pierre, F-92500 Rueil-Malmaison (FR); FOUCOU, Alain, F-92500 Rueil-Malmaison (FR); SAGAN, Zbigniew, F-92500 Rueil-Malmaison (FR)
(74) Mandataire: Cornuejols, Georges
(86) Numéro de dépôt international: PCT/FR2014/053130
(87) Numéro de publication internationale: WO 2015/082831

(56) Documents cités:
- FR-A1- 2 957 705
- NOORE A ET AL: "Embedding biometric identifiers in 2D barcodes for improved security", COMPUTERS & SECURITY, ELSEVIER SCIENCE PUBLISHERS. AMSTERDAM, NL, vol. 23, no. 8, 1 December 2004 (2004-12-01), pages 679 - 686, XP004665115, ISSN: 0167-4048, DOI: 10.1016/J.COSE.2004.09.007

## Description

### DOMAINE TECHNIQUE DE L'INVENTION

La présente invention concerne un procédé et un dispositif de sécurisation d'accès à un message. Elle s'applique, notamment aux documents de sécurité et aux cartes bancaires.

### ETAT DE LA TECHNIQUE

On connaît de nombreuses manières de protéger un contenu, ou message porté sur un support. Par exemple, un codage ou un chiffrement est appliqué aux données constituant ce message. Cependant, la simple connaissance de la clé de décodage ou de déchiffrement permet d'accéder au message. Or ces clés doivent être stockées sur des supports, par exemple papiers, plastiques ou électroniques ou sur des serveurs. Que ces clés soient portées par l'utilisateur ou stockés sur un système informatique, un tiers malveillant suffisamment outillé peut les atteindre.

On connait la demande de brevet FR2957705 qui divulgue un moyen de lecture d'une marque anti-copie.

Ces protections sont donc insuffisantes.

### OBJET DE L'INVENTION

La présente invention vise à remédier à tout ou partie de ces inconvénients.

A cet effet, selon un premier aspect, la présente invention vise un dispositif de lecture d'un message, qui comporte :
- un moyen de lecture de données biométriques d'un porteur du support,
- un moyen de capture, sur un support, d'un message codé comportant des unités de message élémentaires, ledit message présentant du bruit constitué par des défauts de marquage du message sur ledit support aléatoires et imprévisibles pour chaque unité de message élémentaire,
- un moyen de réduction de bruit du message capté, en fonction de données biométriques et
- un moyen de décodage d'au moins une partie du message au moins partiellement débruité.

Grâce à ces dispositions, au moins une partie du message codé n'est pas accessible en l'absence du porteur du support autorisé dont des données biométriques sont nécessaires. De plus, le dispositif objet de la présente invention peut être autonome vis-à-vis de toute source d'information distante, par exemple un serveur sur un réseau informatique.

Dans des modes de réalisation, le moyen de décodage met en œuvre des redondances du message débruité pour déterminer au moins une partie du message codé.

Grâce à ces dispositions, la partie du message à décoder peut être accédée sans appel à une source d'information distante.

Dans des modes de réalisation, le moyen de lecture de données biométriques est configuré pour lire une empreinte digitale du porteur du support.

Dans des modes de réalisation, le moyen de lecture de données biométriques est configuré pour capter une image du visage ou de la main du porteur du support.

Grâce à ces dispositions, une capture des données biométriques est effectuée sans contact entre le porteur du support et le dispositif, ce qui réduit les besoins de nettoyage et les risques de contamination.

Dans des modes de réalisation, le moyen de réduction de bruit calcule un condensât de données biométriques et met en œuvre le condensât pour réduire le bruit du message capté.

On rappelle ici que le condensât est plus connu de l'homme du métier sous son appellation anglaise de « hash ».

Dans des modes de réalisation, le moyen de réduction de bruit met en œuvre un condensât symétrique.

Par exemple, un condensât symétrique est issu d'un chiffrement à clés symétriques.

Dans des modes de réalisation, le moyen de décodage est configuré pour décoder des données biométriques.

Grâce à ces dispositions, le dispositif de lecture permet l'affichage des données biométriques, par exemple pour une confirmation visuelle de l'identité du porteur du support ou une vérification supplémentaire automatique de l'identité du porteur du support.

Dans des modes de réalisation, le moyen de décodage est configuré pour mettre en œuvre une clé asymétrique pour accéder à au moins une partie du message.

Grâce à ces dispositions, le dispositif de lecture objet de la présente invention peut être autonome en disposant d'un ensemble de clés, par exemple publiques d'une infrastructure à clés publiques (« PKI »).

Dans des modes de réalisation, le dispositif de lecture objet de la présente invention comporte un moyen d'entrée d'un code secret par le porteur du support, le moyen de décodage étant configuré pour mettre en œuvre ledit code secret pour accéder à au moins une partie du message.

Grâce à ces dispositions, le consentement du porteur du support à la lecture du message peut être formalisé par la saisie du code secret.

Dans des modes de réalisation, le dispositif de lecture objet de la présente invention comporte un moyen de mémorisation et de communication d'informations de paiement.

Grâce à ces dispositions, le paiement est sécurisé, l'identité du porteur du support étant vérifiée par l'utilisation de données biométriques.

Selon un deuxième aspect, la présente invention vise un procédé de lecture d'un message, qui comporte :
- une étape de lecture de données biométriques d'un porteur du support,
- une étape de capture, sur un support, d'un message codé comportant des unités de message élémentaires, ledit message présentant du bruit constitué par des défauts de marquage du message sur ledit support aléatoires et imprévisibles pour chaque unité de message élémentaire,
- une étape de réduction de bruit du message capté, en fonction de données biométriques et
- une étape de décodage d'au moins une partie du message au moins partiellement débruité.

La présente invention vise également un dispositif de marquage d'un message sur un support, selon la revendication 1.

La présente invention vise également un procédé de marquage d'un message sur un support, selon la revendication 13.

Les avantages, buts et caractéristiques de ce procédé de lecture, de ce dispositif de marquage, de ce procédé de marquage étant similaires à ceux du dispositif de lecture objet de la présente invention, ils ne sont pas rappelés ici.

### BREVE DESCRIPTION DES FIGURES

D'autres avantages, buts et caractéristiques particulières de la présente invention ressortiront de la description qui va suivre faite, dans un but explicatif et nullement limitatif, en regard de dessins annexés, dans lesquels :
- la figure 1 représente, schématiquement, un mode de réalisation particulier du dispositif de lecture objet de la présente invention,
- la figure 2 représente, sous forme d'un logigramme, des étapes d'un mode de réalisation particulier du procédé de lecture objet de la présente invention,
- la figure 3 représente, schématiquement, un mode de réalisation particulier du dispositif de marquage objet de la présente invention,
- la figure 4 représente, sous forme d'un logigramme, des étapes d'un mode de réalisation particulier du procédé de marquage objet de la présente invention et
- la figure 5 représente, schématiquement, une marque.

### DESCRIPTION D'EXEMPLES DE REALISATION DE L'INVENTION

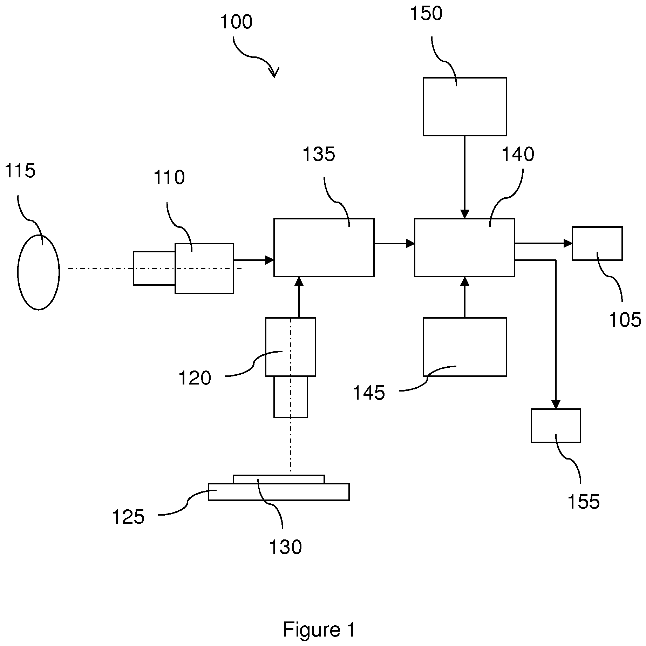

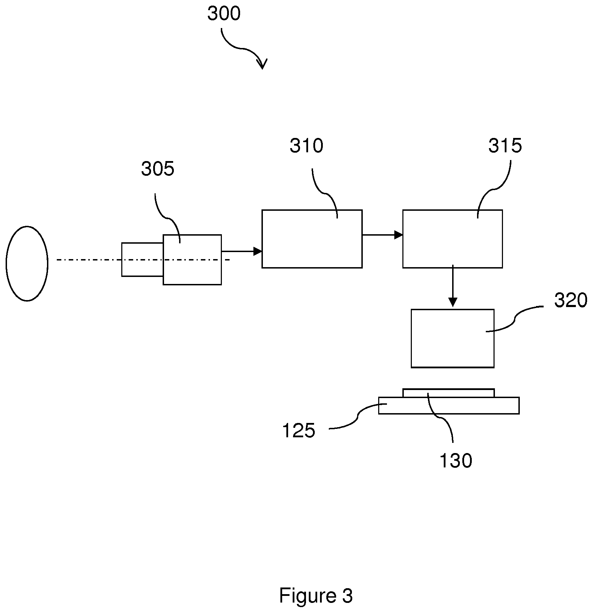

On note, dès à présent, que les figures 1 et 3 ne sont pas à l'échelle.

On observe, en figure 1, un dispositif 100 de lecture d'un message 105, qui comporte :
- un moyen 110 de lecture de données biométriques 115 d'un porteur du support,
- un moyen 120 de capture, sur un support 125, d'un message 130 codé comportant des unités de message élémentaires, ledit message présentant du bruit constitué par des défauts de marquage du message sur ledit support, lesdits défauts étant aléatoires et imprévisibles pour chaque unité de message élémentaire,
- un moyen 135 de réduction de bruit du message capté, en fonction de données biométriques et
- un moyen 140 de décodage d'au moins une partie du message au moins partiellement débruité.

Le moyen 110 de lecture de données biométriques est, par exemple, un lecteur d'au moins une empreinte digitale du porteur du support ou une caméra configurée pour capter un profil d'une main ou le visage du porteur du support. Le moyen 110 de lecture de données biométriques fournit des données caractéristiques de la partie du corps du porteur du support qui est analysée, par exemple les points caractéristiques d'une empreinte digitale, les longueurs et formes des doigts de la main ou les dimensions et positionnements respectifs des composants du visage. Dans des modes de réalisation, le moyen 110 de lecture de données biométriques capte la voix de l'utilisateur.

Le support 125 est un document, par exemple une carte d'identité ou de paiement, une feuille de papier, une étiquette. Le marquage du message sur le support a pour effet de modifier, localement, au moins une caractéristique physique du support, en surface ou dans l'épaisseur. Par exemple, le marquage est une impression, avec ou sans encre. Le message codé 130 comporte des unités de message élémentaires, ledit message présentant du bruit constitué par des défauts de marquage du message sur ledit support, lesdits défauts étant aléatoires et imprévisibles pour chaque unité de message élémentaire. Le taux d'erreurs dues au bruit de marquage est préférentiellement supérieur à cinq pour cents, c'est-à-dire qu'au moins cinq pour cent des unités élémentaires de la marque sont suffisamment modifiées aléatoirement pour que leur lecture par le moyen de capture soit erronée.

Le moyen 120 de capture du message 130 est, par exemple, un capteur d'image matricielle ou un scanner.

Le moyen 135 de réduction de bruit du message capté, en fonction de données biométriques est configuré pour calculer un condensât (ou « hash ») de données biométriques et à mettre en œuvre ledit condensât pour réduire le bruit du message capté.

On observe ici que, bien que les données biométriques soient différentes, entre le bruitage et le débruitage, puisqu'elles correspondent à deux captures éloignées dans le temps et faites dans des conditions différentes, leur traitement, qui extrait des caractéristiques, par exemple par analyse fréquentielle, transformation fréquentielle ou extraction de condensât, fournit des données ayant une faible variation, bien que non nulle. En appliquant ces caractéristiques, bruitées car variables, au message, on augmente ou on réduit le bruit dont ce message est affecté.

Par exemple, en partant d'une trace digitale, que l'on normalise en dimension et en angles, on extraits des points singuliers (dont les minuties), eux-mêmes normalisées. En appliquant une fonction de « ou exclusif » à une image de cette trace ou de ces points singuliers ou à un condensât de ces images, on réalise un bruitage ou un débruitage du message.

On rappelle ici, qu'une empreinte digitale ou dactylogramme est le résultat de l'apposition d'un doigt sur un support après encrage de celui-ci. Le dessin formé sur le support est constitué de dermatoglyphes. Les empreintes digitales sont uniques et caractéristiques de chaque individu.

Une « trace digitale », terme plus général, est le résultat d'un contact entre un doigt et un support, l'empreinte digitale étant un exemple de trace digitale.

Les traces papillaires (ou leurs empreintes) regroupent les traces digitales (ou leurs empreintes dont les logiciels d'identification automatique repèrent de 150 à 200 points caractéristiques) et les traces palmaires (traces des paumes de la main repérées par 1 500 à 2 000 points caractéristiques).

Par analogie, on parle d'empreinte vocale authentifiée par des techniques de reconnaissance du locuteur.

La trace digitale peut être :
- visible (ou directe) : elle est dite positive lors de l'apposition de matière et elle est dite négative lors de l'enlèvement de matière,
- latente (invisible à l'œil nu) : la trace vient du dépôt de sueur (sécrétion des glandes sudoripares : 99 % d'eau qui en s'évaporant laisse en place sels et acides aminés) et/ou du dépôt de sécrétions sébacées (glandes sébacées) et/ou
- moulée : la trace vient du contact d'un doigt avec une surface malléable (cire, mastic...).

Les empreintes digitales peuvent se diviser en trois grands types de motifs : arcs (appelés aussi arches ou tentes), boucles à droite ou à gauche et spires, verticilles ou tourbillons. Ces trois types d'empreintes regroupent 95 % des doigts humains : 60 % pour les boucles, 30 % pour les spirales et 5 % pour les tentes17. Chaque empreinte appartenant à un type classé : adelte, bidelte, tridelte (rare). Les monodeltes se divisent en sous-groupes : les normales, externes, composites, de même pour les bideltes : à verticilles concentriques, à verticilles en Z.

On différencie les motifs entre eux à l'aide de « points singuliers » sur les boucles, arcs ou spires :
- points singuliers globaux : noyau ou centre: lieu de convergences des stries,
- delta: lieu de divergences des stries,
- points singuliers locaux (appelés aussi minuties) : points d'irrégularité se trouvant sur les lignes capillaires (terminaisons, bifurcations, îlots-assimilés à deux terminaisons, lacs).

On estime qu'il y a plus de cent points de convergences entre deux empreintes identiques. En France, la loi exige 12 points (appelés minuties), 18 relevés sans contrariété pour authentifier l'empreinte d'un suspect. Entre 8 et 10 points, une forte présomption est établie grâce à des algorithmes. En Suisse, un système probabiliste est utilisé dans les comparaisons : on calcule la probabilité du dessin en se basant sur les statistiques d'apparition des différentes minuties : îlots, divisions.

La probabilité que deux personnes aient la même empreinte digitale est de 1 sur 10¹⁴, ce qui est très faible à l'échelle de la population humaine. De plus, son caractère aléatoire s'affranchit des risques de ressemblances entre individus partageant un même patrimoine génétique : des individus monozygotes comme des jumeaux ou des quadruplés par exemple auront chacun un jeu d'empreintes digitales qui leur sera propre et différent de celui des autres individus de la même fratrie, de même pour les empreintes légèrement différentes entre la main gauche et la main droite. L'explication est que les gènes sont responsables de l'architecture générale des empreintes (les trois grands motifs) alors que le développement embryonnaire et l'environnement de la vie intra-utérine influent sur les points singuliers.

Préférentiellement, le bruitage et la réduction de bruit (moyens ou étapes) mettent en œuvre un condensât (en anglais hash) symétrique. Ce principe est relativement facile à implémenter avec des données biométriques telles que celle de l'iris car, par sa nature, c'est une empreinte qui est stable dans le temps. Par analogie, ces données biométriques se comportent, à la lecture, comme un code à barres.

Parmi les données biométriques pouvant être mises en œuvre pour le bruitage et la réduction de bruit, on peut citer :
- l'image de l'iris de l'œil,
- chaque empreinte digitale,
- les données issues d'un traitement d'une image du visage, par exemple issues d'une reconnaissance faciale,
- les données issues d'un traitement d'une image de la main, par exemple issues d'une reconnaissance du profil de la main plaquée sur une surface plane,
- les données issues d'un traitement d'une capture de la voix, par exemple issues d'une reconnaissance vocale et
- les données issues d'un traitement d'une succession de positions, par exemple issues d'une reconnaissance de mouvements, par exemple mouvements de la main lors d'une signature, mouvements du corps, mouvements oculaires.

Le moyen 140 de décodage d'au moins une partie du message au moins partiellement débruité met en œuvre des redondances du message débruité pour déterminer au moins une partie du message codé. Par exemple, le moyen 140 connaît les positions des unités de message élémentaires redondantes ou le code de génération de redondance, pour exploiter ces redondances, détecter et corriger des erreurs constituant le bruit. Par exemple, les redondances prennent la forme de codes de correction d'erreurs (en anglais « check redundancy code » ou code de vérification de redondance).

Le moyen 140 de décodage est, dans des modes de réalisation, configuré pour décoder des données biométriques. Dans des modes de réalisation, le dispositif 100 comporte un moyen d'affichage des données biométriques lues dans le message. Un tiers peut ainsi vérifier visuellement l'identité du porteur du support. Dans des modes de réalisation, le dispositif 100 comporte un moyen de vérification automatique que le porteur du support correspond aux données biométriques lues dans le message.

Dans des modes de réalisation, le moyen 140 de décodage met en œuvre une clé asymétrique pour accéder à au moins une partie du message.

Dans le mode de réalisation illustré en figure 1, le dispositif 100 comporte, en outre, un moyen 145 d'entrée d'un code secret par le porteur du support. Par exemple, le moyen 145 est un clavier. Le moyen 140 de décodage est alors configuré pour mettre en œuvre le code secret pour accéder à au moins une partie du message. Par exemple, ce code secret fait partie d'une clé de déchiffrement du message.

Dans le mode de réalisation illustré en figure 1, le dispositif 100 comporte un moyen de mémorisation et de communication d'informations de paiement. Par exemple, le dispositif 100 adresse, avec des moyens de communication 155 à un serveur de la banque du porteur du support, des données issues d'une caisse enregistreuse 150 de magasin.

En variante, on ajoute un questionnement de l'utilisateur (procédure connue sous le nom de « challenge-response ») concernant la transaction afin de sécuriser l'acquisition de données biométrique au niveau matériel (hardware). Ainsi, on introduit une signature des données afin de rendre inopérant l'attaque par présentation des données déjà récoltées et éventuellement interceptées.

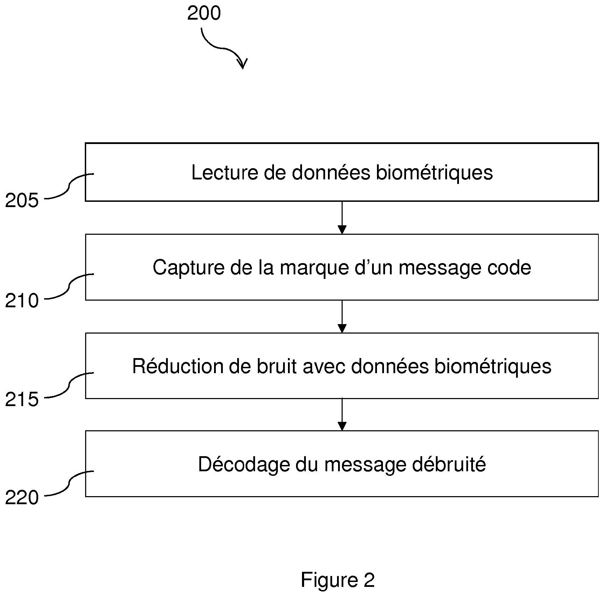

On observe, en figure 2, un procédé de lecture d'un message 200, qui comporte :
- une étape 205 de lecture de données biométriques d'un porteur du support,
- une étape 210 de capture, sur un support, d'un message codé comportant des unités de message élémentaires, ledit message présentant du bruit constitué par des défauts de marquage du message sur ledit support aléatoires et imprévisibles pour chaque unité de message élémentaire,

- une étape 215 de réduction de bruit du message capté, en fonction de données biométriques et
- une étape 220 de décodage d'au moins une partie du message au moins partiellement débruité.

On observe, en figure 3, un dispositif 300 de marquage d'un message sur un support, qui comporte :
- un moyen 305 de lecture de données biométriques d'un porteur du support,
- un moyen 310 de bruitage d'un message codé, en fonction de données biométriques,
- un moyen 315 de codage d'au moins une partie du message et
- un moyen 320 de marquage, sur un support, du message codé comportant des unités de message élémentaires, configuré pour que ladite marque présente du bruit constitué par des défauts de marquage du message sur ledit support aléatoires et imprévisibles pour chaque unité de message élémentaire.

Dans le cas où la présente invention est mise en œuvre pour signer une action réalisée par le porteur du support de la marque représentative du message, le support sert à l'authentification du porteur. Dans le cas où la présente invention est mise en œuvre pour signer un document, en plus de l'authentification du porteur, on authentifie le contenu du document. Par exemple, le dispositif 300 sert, lors de la signature d'un contrat, à associer l'identité des signataires avec une trace, par exemple un condensât du contenu complet du contrat.

### Penser à signature chez notaire

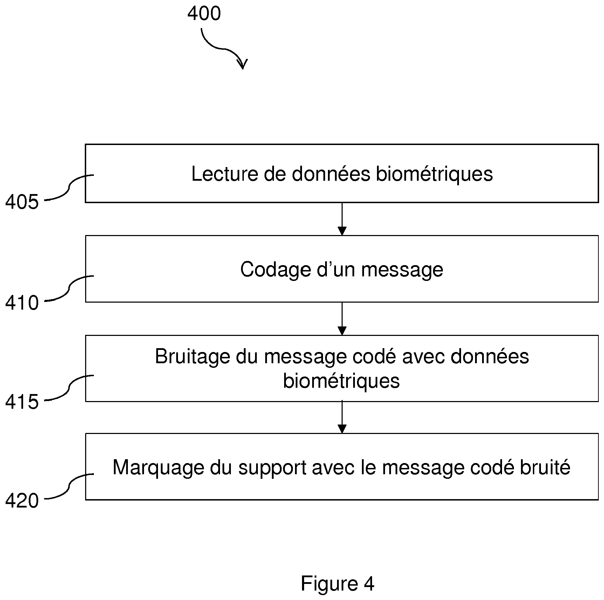

On observe, en figure 4, un procédé 400 de marquage d'un message sur un support, qui comporte :
- une étape 405 de lecture de données biométriques d'un porteur du support,
- une étape 410 de codage d'au moins une partie d'un message,
- une étape 415 de bruitage du message codé, en fonction de données biométriques,
   et
- une étape 420 de marquage, sur un support, du message codé comportant des unités de message élémentaires, au cours de laquelle ladite marque présente du bruit constitué par des défauts de marquage du message sur ledit support aléatoires et imprévisibles pour chaque unité de message élémentaire.

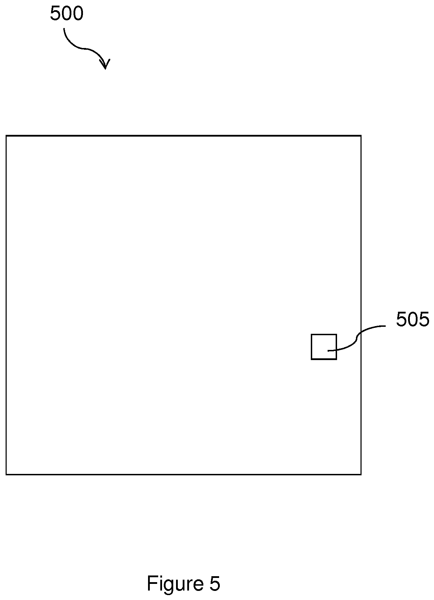

On observe, en figure 5, une marque 500, qui représente un message codé bruité en fonction de données biométriques et qui comporte des unités de message élémentaires 505. La marque 500 présente du bruit constitué par des défauts de marquage du message sur ledit support aléatoires et imprévisibles pour chaque unité de message élémentaire.

## Revendications

1. Dispositif de marquage (300) d'un message sur un support, comportant :
- un moyen de lecture (305) de données biométriques d'un porteur du support,
- un moyen de codage (310) d'au moins une partie d'un message,
- un moyen de bruitage (315) du message codé, par application d'une fonction mathématique aux données du message codé, fonction définie par des données biométriques et
- un moyen de marquage (320), sur un support, du message codé bruité comportant des unités de message élémentaires, configuré pour que ladite marque présente du bruit constitué par des défauts de marquage du message sur ledit support aléatoires et imprévisibles pour chaque unité de message élémentaire.

2. Dispositif (300) selon la revendication 1, dans lequel le moyen de bruitage (315) calcule un condensât de données biométriques et par application d'une fonction mathématique aux données du message codé, fonction définie par ledit condensât pour bruiter le message.

3. Dispositif (100) de lecture d'un message (105), **caractérisé en ce qu'**il comporte :
- un moyen de lecture (110) de données biométriques (115) d'un porteur du support,
- un moyen de capture (120), sur un support (125), d'un message codé (130) par un dispositif (300) selon l'une des revendications 1 ou 2, message codé comportant des unités de message élémentaires, ledit message présentant du bruit constitué par des défauts de marquage du message sur ledit support aléatoires et imprévisibles pour chaque unité de message élémentaire,
- un moyen de réduction (135) de bruit du message capté, par application d'une fonction mathématique aux données du message capté, fonction définie par des données biométriques et
- un moyen de décodage (140) et correction d'erreurs d'au moins une partie du message, ledit message étant au moins partiellement débruité.

4. Dispositif (100) selon la revendication 3, dans lequel le moyen de décodage (140) met en œuvre des redondances du message débruité pour déterminer au moins une partie du message codé.

5. Dispositif (100) selon l'une des revendications 3 ou 4, dans lequel le moyen de lecture (110) de données biométriques est configuré pour lire une empreinte digitale du porteur du support.

6. Dispositif (100) selon l'une des revendications 3 à 5, dans lequel le moyen de lecture (110) de données biométriques est configuré pour capter une image du visage ou de la main du porteur du support.

7. Dispositif (100) selon l'une des revendications 3 à 6, dans lequel le moyen de réduction (135) de bruit calcule un condensât de données biométriques et applique une fonction mathématique aux données du message capté, fonction définie par le condensât pour réduire le bruit du message capté.

8. Dispositif (100) selon la revendication 7, dans lequel le moyen de réduction (135) de bruit met en œuvre un condensât symétrique.

9. Dispositif (100) selon l'une des revendications 3 à 8, dans lequel le moyen de décodage (140) est configuré pour décoder des données biométriques.

10. Dispositif (100) selon l'une des revendications 3 à 9, dans lequel le moyen de décodage (140) est configuré pour mettre en œuvre une clé asymétrique pour accéder à au moins une partie du message.

11. Dispositif (100) selon l'une des revendications 3 à 10, qui comporte un moyen d'entrée (145) d'un code secret par le porteur du support, le moyen de décodage (140) étant configuré pour mettre en œuvre ledit code secret pour accéder à au moins une partie du message.

12. Dispositif (100) selon l'une des revendications 3 à 11, qui comporte un moyen de mémorisation (155) et de communication d'informations de paiement.

13. Procédé (400) de marquage d'un message sur un support, comportant :
- une étape de lecture (405) de données biométriques d'un porteur du support,
- une étape de codage (410) d'au moins une partie d'un message,
- une étape de bruitage (415) du message codé, par application d'une fonction mathématique aux données du message codé, fonction définie par des données biométriques et
- une étape de marquage (420), sur un support, du message codé bruité comportant des unités de message élémentaires, au cours de laquelle ladite marque présente du bruit constitué par des défauts de marquage du message sur ledit support aléatoires et imprévisibles pour chaque unité de message élémentaire.

14. Procédé (300) de lecture d'un message, **caractérisé en ce qu'**il comporte :
- une étape de lecture (305) de données biométriques d'un porteur du support,
- une étape de capture (310), sur un support, d'un message codé par la mise en œuvre d'un procédé (400) selon la revendication 13, message codé comportant des unités de message élémentaires, ledit message présentant du bruit constitué par des défauts de marquage du message sur ledit support aléatoires et imprévisibles pour chaque unité de message élémentaire,
- une étape de réduction (315) de bruit du message capté, par application d'une fonction mathématique aux données du message capté, fonction définie par des données biométriques et
- une étape de décodage (320) et correction d'erreurs d'au moins une partie du message, ledit message étant au moins partiellement débruité.

## Patentansprüche

1. Kennzeichnungsvorrichtung (300) für eine Nachricht auf einem Medium, aufweisend:
- ein Lesemittel (305) für biometrische Daten eines Trägers des Mediums,
- ein Kodierungsmittel (310) für wenigstens einen Teil einer Nachricht,
- ein Verrauschungsmittel (315) der kodierten Nachricht durch Anwendung einer mathematischen Funktion auf die Daten der kodierten Nachricht, wobei die Funktion durch biometrische Daten definiert ist, und
- ein Kennzeichnungsmittel (320) auf einem Medium der verrauschten kodierten Nachricht, die elementare Nachrichteneinheiten aufweist, das ausgelegt ist, damit die Kennzeichnung ein Rauschen aufweist, das aus für jede elementare Nachrichteneinheit zufälligen und unvorhersehbaren Fehlern bei der Kennzeichnung der Nachricht auf dem Medium besteht.

2. Vorrichtung (300) nach Anspruch 1, wobei das Verrauschungsmittel (315) ein Kondensat biometrischer Daten berechnet und durch Anwendung einer mathematischen Funktion auf die Daten der kodierten Nachricht, wobei die Funktion durch das Kondensat definiert ist, um die Nachricht zu verrauschen.

3. Vorrichtung (100) zum Lesen einer Nachricht (105), **dadurch gekennzeichnet, dass** sie aufweist:
- ein Lesemittel (110) für biometrische Daten (115) eines Trägers des Mediums,
- ein Mittel zur Erfassung (120) auf einem Medium (125) einer durch eine Vorrichtung (300) nach einem der Ansprüche 1 oder 2 kodierten Nachricht (130), wobei die kodierte Nachricht elementare Nachrichteneinheiten aufweist, wobei die Nachricht ein Rauschen aufweist, das aus für jede elementare Nachrichteneinheit zufälligen und unvorhersehbaren Fehlern bei der Kennzeichnung der Nachricht auf dem Medium besteht,
- ein Mittel zur Reduzierung (135) des Rauschens der erfassten Nachricht durch Anwendung einer mathematischen Funktion auf die Daten der erfassten Nachricht, wobei die Funktion durch biometrische Daten definiert ist, und
- ein Mittel zur Dekodierung (140) und Fehlerkorrektur von wenigstens einem Teil der Nachricht, wobei die Nachricht wenigstens teilweise rauschbefreit ist.

4. Vorrichtung (100) nach Anspruch 3, wobei das Dekodierungsmittel (140) Redundanzen der rauschbefreiten Nachricht umsetzt, um wenigstens einen Teil der kodierten Nachricht zu bestimmen.

5. Vorrichtung (100) nach einem der Ansprüche 3 oder 4, wobei das Lesemittel (110) für biometrische Daten ausgelegt ist, um einen digitalen Fingerabdruck des Trägers des Mediums zu lesen.

6. Vorrichtung (100) nach einem der Ansprüche 3 bis 5, wobei das Lesemittel (110) für biometrische Daten ausgelegt ist, um ein Bild des Gesichts oder der Hand des Trägers des Mediums zu erfassen.

7. Vorrichtung (100) nach einem der Ansprüche 3 bis 6, wobei das Rauschminderungsmittel (135) ein Kondensat biometrischer Daten berechnet und eine mathematische Funktion auf die Daten der erfassten Nachricht anwendet, wobei die Funktion durch das Kondensat definiert ist, um das Rauschen der erfassten Nachricht zu reduzieren.

8. Vorrichtung (100) nach Anspruch 7, wobei das Rauschminderungsmittel (135) ein symmetrisches Kondensat umsetzt.

9. Vorrichtung (100) nach einem der Ansprüche 3 bis 8, wobei das Dekodierungsmittel (140) zum Dekodieren der biometrischen Daten ausgelegt ist.

10. Vorrichtung (100) nach einem der Ansprüche 3 bis 9, wobei das Dekodierungsmittel (140) ausgelegt ist, um einen asymmetrischen Schlüssel anzuwenden, um auf wenigstens einen Teil der Nachricht zuzugreifen.

11. Vorrichtung (100) nach einem der Ansprüche 3 bis 10, die ein Mittel (145) zur Eingabe eines Geheimcodes durch den Träger des Mediums aufweist, wobei das Dekodierungsmittel (140) ausgelegt ist, um den Geheimcode anzuwenden, um auf wenigstens einen Teil der Nachricht zuzugreifen.

12. Vorrichtung (100) nach einem der Ansprüche 3 bis 11, die ein Speicher- (155) und Kommunikationsmittel für Zahlungsinformationen aufweist.

13. Verfahren (400) zum Kennzeichnung einer Nachricht auf einem Medium, aufweisend:
- einen Schritt (405) des Lesens biometrischer Daten eines Trägers des Mediums,
- einen Schritt (410) des Kodierens von wenigstens einem Teil einer Nachricht,
- einen Schritt (415) des Verrauschens der kodierten Nachricht durch Anwendung einer mathematischen Funktion auf die Daten der kodierten Nachricht, wobei die Funktion durch biometrische Daten definiert ist, und
- einen Schritt (420) des Kennzeichnens auf einem Medium der verrauschten kodierten Nachricht, die elementare Nachrichteneinheiten aufweist, währenddessen die Kennzeichnung ein Rauschen aufweist, das aus für jede elementare Nachrichteneinheit zufälligen und unvorhersehbaren Fehlern bei der Kennzeichnung der Nachricht auf dem Medium besteht.

14. Verfahren (300) zum Lesen einer Nachricht, **dadurch gekennzeichnet, dass** es aufweist:
- einen Schritt (305) des Lesens biometrischer Daten eines Trägers des Mediums,
- einen Schritt (310) des Erfassens, auf einem Medium, einer kodierten Nachricht durch die Durchführung eines Verfahrens (400) nach Anspruch 13, wobei die kodierte Nachricht elementare Nachrichteneinheiten aufweist, wobei die Nachricht ein Rauschen aufweist, das aus für jede elementare Nachrichteneinheit zufälligen und unvorhersehbaren Fehlern bei der Kennzeichnung der Nachricht auf dem Medium besteht,
- einen Schritt (315) des Reduzierens des Rauschens der erfassten Nachricht durch Anwendung einer mathematischen Funktion auf die Daten der erfassten Nachricht, wobei die Funktion durch biometrische Daten definiert ist, und
- einen Schritt (320) des Dekodierens und der Fehlerkorrektur von wenigstens einem Teil der Nachricht, wobei die Nachricht wenigstens teilweise rauschbefreit ist.

## Claims

1. Device (300) for marking a message on a medium, comprising:
- a means (305) for reading biometric data of a holder of the medium;
- a means (310) for encoding at least one portion of a message;
- a means (315) for adding noise to the encoded message, by applying a mathematical function to the data of the encoded message, a function defined by biometric data; and
- a means (320) for marking, on a medium, the noised encoded message comprising elementary message units, configured so that said marking has noise that consists of marking defects of the message on said medium which are random and unpredictable for each elementary message unit.

2. Device (300) according to claim 1, wherein the means (315) for adding noise calculates a biometric data hash and by applying a mathematical function to the data of the encoded message, a function defined by said hash to add noise to the message.

3. Device (100) for reading a message (105), **characterised in that** it comprises:
- a means (110) for reading biometric data (115) of a holder of the medium;
- a means (120) for capturing, on a medium (125), a message (130) encoded by a device (300) according to one of claims 1 or 2, an encoded message comprising elementary message units, said message having noise that consists of marking defects of the message on said medium which are random and unpredictable for each elementary message unit;
- a means (135) for reducing the noise of the captured message, by applying a mathematical function to the data of the captured message, a function defined by biometric data; and
- a means (140) for decoding and correcting errors of at least one portion of the message, said message being at least partly denoised.

4. Device (100) according to claim 3, wherein the decoding means (140) utilises redundancies of the denoised message to determine at least one portion of the encoded message.

5. Device (100) according to one of claims 3 or 4, wherein the biometric data reading means (110) is configured to read a fingerprint of the holder of the medium.

6. Device (100) according to one of claims 3 to 5, wherein the biometric data reading means (110) is configured to capture an image of the face or of the hand of the holder of the medium.

7. Device (100) according to one of claims 3 to 6, wherein the noise reduction means (135) calculates a biometric data hash and applies a mathematical function to the data of the captured message, a function defined by the hash to reduce the noise in the captured message.

8. Device (100) according to claim 7, wherein the noise reduction means (135) utilises a symmetrical hash.

9. Device (100) according to one of claims 3 to 8, wherein the decoding means (140) is configured to decode biometric data.

10. Device (100) according to one of claims 3 to 9, wherein the decoding means (140) is configured to utilise an asymmetric key to access at least one portion of the message.

11. Device (100) according to one of claims 3 to 10, which comprises a means (145) for inputting a secret code by the holder of the medium, the decoding means (140) being configured to utilise said secret code to access at least one portion of the message.

12. Device (100) according to one of claims 3 to 11, which comprises a means (155) for storing and communicating payment information.

13. Method (400) for reading a message on a medium, comprising:
- a step (405) of reading biometric data of a holder of the medium;
- a step (410) of encoding at least one portion of the message;
- a step (415) of adding noise to the encoded message, by applying a mathematical function to the data of the encoded message, a function defined by biometric data; and
- a step (420) of marking, on a medium, the noised encoded message comprising elementary message units, during which said marking has noise that consists of marking defects of the message on said medium which are random and unpredictable for each elementary message unit.

14. Method (300) for reading a message, **characterised in that** it comprises:
- a step (305) of reading biometric data of a holder of the medium;
- a step (310) of capturing, on a medium, a message encoded by utilising a method (400) according to claim 13, the encoded message comprising elementary message units, said message having noise that consists of marking defects of the message on said medium which are random and unpredictable for each elementary message unit;
- a step (315) of reducing the noise of the captured message, by applying a mathematical function to the data of the captured message, a function defined by biometric data; and
- a step (320) of decoding and correcting errors of at least one portion of the message, said message being at least partly denoised.
